# FASCICULE DE BREVET EUROPEEN

(11) **EP 0 346 962 B1**
(45) Date de publication et mention de la délivrance du brevet: **12.05.1993**
(21) Numéro de dépôt: 89201394.7
(22) Date de dépôt: 01.06.1989
(51) Int. Cl.: C01G 23/00

(54) **Procédé pour la fabrication de cristaux de titanate de baryum et/ou de strontium**
Verfahren zur Herstellung von Barium- und/oder Strontiumtitanatkristallen
Process for the preparation of barium and/or strontium titanate crystals

(30) Priorité: 13.06.1988 BE 8800674
(43) Date de publication de la demande: 20.12.1989
(73) Titulaire: SOLVAY (Société Anonyme), B-1050 Bruxelles (BE)
(72) Inventeur: Lerot, Luc, B-1200 Bruxelles (BE); Wautier, Henri, B-7490 Braine-le-Comte (BE)
(74) Mandataire: Anthoine, Paul

(56) Documents cités:
- EP-A- 0 141 551
- EP-A- 0 177 198
- EP-A- 0 238 103
- EP-A- 0 286 155
- EP-A- 0 297 646
- US-A- 3 331 659
- US-A- 3 647 364

## Description

L'invention a pour objet un procédé pour la fabrication de cristaux de titanate de baryum et/ou de strontium, ainsi que l'utilisation de ces cristaux.

Les poudres formées de cristaux de titanate de baryum ou de strontium trouvent des applications dans divers domaines de la technique, notamment dans l'industrie des céramiques et pour la fabrication de composants électroniques. Dans ces applications, on recherche généralement des poudres finement divisées, formées de cristaux réguliers de dimensions inférieures au micron et se prêtant bien aux techniques de mise en forme et de frittage.

Dans le brevet US-A-3647364 (United States of America - Secretary of the Air Force), on décrit un procédé pour fabriquer des cristaux de titanate de baryum ou de strontium, selon lequel on dissout un alcoolate de titane et un alcoolate de baryum ou de strontium dans un solvant organique approprié et on traite la solution organique résultante avec de l'eau, dans des conditions réglées pour cohydrolyser les alcoolates et précipiter de l'oxyde de titane et de l'oxyde de baryum ou de strontium à l'état d'une poudre amorphe finement divisée. Celle-ci est ensuite soumise à un traitement de calcination à une température d'au moins 700°C, pour cristalliser le titanate de baryum ou de strontium. En général, les poudres de cristaux de titanate de baryum ou de strontium obtenues à l'issue de ce procédé connu comportent des agglomérats, ce qui est néfaste pour les opérations ultérieures de frittage.

L'invention remédie à cet inconvénient en fournissant un procédé nouveau qui permet d'obtenir des cristaux de titanate de baryum et/ou de strontium à l'état de poudres finement divisées, pratiquement exemptes d'agglomérats.

En conséquence, l'invention concerne un procédé pour la fabrication de cristaux de titanate de baryum et/ou de strontium, comprenant une coprécipitation d'oxyde de titane et d'oxyde de baryum et/ou de strontium à l'état d'une poudre amorphe et un chauffage de la poudre amorphe à une température comprise entre 400 et 1000°C; selon l'invention, le procédé se caractérise en ce que, pendant la coprécipitation, on hydrolyse un alcoolate de titane en présence d'un composé du baryum et/ou du strontium sélectionné parmi les oxydes, les hydroxydes et les alcoolates et d'un acide organique ou l'un de ses dérivés contenant plus de 6 atomes de carbone dans la molécule, et en ce que, pendant le chauffage de la poudre amorphe, on fragmente les particules qui la constituent en distillant l'acide organique ou son dérivé dans un courant gazeux que l'on fait circuler au contact de la poudre, ledit courant gazeux comprenant un gaz sélectionné parmi la vapeur d'eau, l'ammoniac et le dioxyde de carbone et étant exempt d'oxygène et d'un autre gaz oxydant et qu'après avoir distillé l'acide organique ou son dérivé, on fait circuler au contact de la poudre un gaz oxydant exempt d'humidité.

Dans le procédé selon l'invention, la coprécipitation consiste en une précipitation simultanée de l'oxyde de titane et de l'oxyde de baryum et/ou de strontium.

La poudre amorphe est une poudre formée de particules solides non cristallisées (c'est-à-dire un verre présentant des propriétés isotropes) d'oxydes métalliques mixtes de titane et de baryum et/ou de strontium. Les oxydes métalliques mixtes sont, par définition, une solution solide, c'est-à-dire un mélange homogène au niveau moléculaire ou ionique.

Le chauffage de la poudre a pour fonction de provoquer la cristallisation des oxydes mixtes de titane et de baryum et/ou de strontium. Il doit dès lors être exécuté à une température supérieure à 400°C, dans des conditions qui peuvent être définies par un travail de routine au laboratoire. La température de la poudre doit rester au-dessous de 1000°C, pour éviter un frittage. Selon l'invention, pour coprécipiter l'oxyde de titane et l'oxyde de baryum et/ou l'oxyde de strontium, on hydrolyse un alcoolate de titane en présence d'un composé du baryum et/ou du strontium qui est un oxyde, un hydroxyde ou un alcoolate de baryum et/ou de strontium.

Dans le procédé selon l'invention, un alcoolate métallique est tout composé dans lequel un métal est relié par l'intermédiaire d'un atome d'oxygène, à un groupement hydrocarboné tel qu'un groupement aromatique ou un groupement aliphatique linéaire ou cyclique, saturé ou insaturé, non substitué ou substitué partiellement ou totalement. Les alcoolates métalliques à groupements aliphatiques sont spécialement recommandés; ceux à groupements aliphatiques saturés non substitués sont préférés, tels que, par exemple, les groupements méthyl, éthyl, n-propyl isopropyl, n-butyl et isobutyl.

L'hydrolyse des alcoolates métalliques est une technique bien connue pour la production de poudres d'oxydes métalliques (Better Ceramics Through Chemistry - Materials Research Society Symposia Proceedings - Vol. 32 - 1984 - Elsevier Science Publishing Co., Inc. - BRUCE FEGLEY et al. : "Synthesis, characterization and processing of monosized ceramic powders", pages 187 à 197; brevet US-A-4543341). Dans le procédé selon l'invention, l'hydrolyse a pour fonction de décomposer l'alcoolate de titane et, le cas échéant, l'alcoolate de baryum et/ou de strontium. Elle est opérée en présence d'un acide organique ou l'un de ses dérivés contenant plus de 6 atomes de carbone dans la molécule.

On entend désigner par dérivé d'un acide organique, un produit organique dérivé de l'acide qui peut lui-même avoir un caractère acide ou être dénué de caractére acide, en étant alors, par exemple, un corps neutre. Les acides carboxyliques saturés ou insaturés et leurs dérivés sont spécialement recommandés. Il convient de sélectionner des acides ou des dérivés d'acides contenant plus de six atomes de carbone dans leur molécule. Des acides carboxyliques qui se sont révélés spécialement avantageux sont ceux contenant au moins huit atomes de carbone dans leur molécule, tels que les acides octanoïque, laurique, palmitique, isopalmitique, oléique et stéarique. Les acides carboxyliques comprenant plus de dix atomes de carbone dans leur molécule sont préférés. Des exemples de dérivés d'acides organiques utilisables dans le procédé selon l'invention sont les anhydrides, les esters et les sels de ces acides.

On a observé que l'acide organique ou son dérivé agit sur la morphologie de la poudre amorphe d'oxydes métalliques mixtes obtenue à l'issue de l'hydrolyse, en inhibant l'agglomération des particules formant la poudre et en conférant à celles-ci un profil sphérique. En règle générale, il doit être mis en oeuvre en quantité suffisante pour que son action se manifeste sur la morphologie de la poudre, en évitant toutefois de dépasser un seuil au-delà duquel son action sur la qualité de la poudre pourrait être négative. En pratique, la quantité optimum d'acide organique ou son dérivé qu'il convient de mettre en oeuvre dépend de nombreux paramètres parmi lesquels figurent notamment l'acide organique sélectionné (principalement la longueur de sa chaîne carbonée), ainsi que les conditions opératoires, et elle doit être déterminée dans chaque cas particulier en fonction de la qualité recherchée pour la morphologie de la poudre amorphe. En général, on recommande de mettre en oeuvre une masse de composé organique acide comprise entre 20 et 200 g par mole de titanate de baryum et/ou de strontium à produire. Les quantités comprises entre 50 et 150 g sont préférées, dans le cas où l'acide organique est sélectionné parmi les acides carboxyliques.

L'hydrolyse peut être effectuée dans l'air ambiant. Toutefois, pour éviter une décomposition incontrôlée de l'alcoolate de titane et, le cas échéant, de l'alcoolate de baryum et/ou de strontium, il est souhaitable que l'hydrolyse soit exécutée sous une atmosphère gazeuse exempte d'humidité. Il est par ailleurs recommandé d'éviter la présence de CO₂ dans l'atmosphère gazeuse, dans le cas où l'hydrolyse est exécutée en présence d'oxyde ou d'hydroxyde de baryum ou de strontium, pour éviter une carbonatation de ce composé. L'air sec, déshydraté et décarbonaté, l'azote et l'argon sont des exemples d'atmosphères utilisables dans le procédé selon l'invention.

En principe, la température et la pression ne sont pas critiques. En général, dans la majorité des cas, on peut travailler à la température ambiante et la pression atmosphérique normale.

Dans l'exécution du procédé selon l'invention, l'hydrolyse est réglée pour précipiter les oxydes mixtes à l'état d'une poudre, sans former un gel. A cet effet, il est recommandé de réaliser un mélange homogène de l'alcoolate de titane, du composé du baryum et/ou du strontium, de l'eau et de l'acide organique ou son dérivé, le plus rapidement possible, avant que débute la nucléation. A cet effet, dans une forme d'exécution préférée du procédé selon l'invention, l'alcoolate de titane, le composé du baryum et/ou du strontium et l'eau sont mis en oeuvre à l'état de solutions organiques. Le cas échéant, il convient que le solvant organique de l'alcoolate soit exempt d'eau. Il convient par ailleurs d'éviter la présence de particules solides dans les solutions organiques. On peut utiliser des solvants organiques identiques ou différents pour l'alcoolate de titane, le composé du baryum et/ou du strontium et l'eau. Dans le cas de solvants organiques différents, il convient généralement que ceux-ci soient miscibles. Les alcools et leurs dérivés conviennent bien, notamment le méthanol, l'éthanol, le n-propanol, l'isopropanol, le n-butanol et l'isobutanol. Les taux de dilution optimum de l'alcoolate de titane, du composé du baryum et/ou du strontium et de l'eau dans leurs solvants organiques respectifs dépendent de divers facteurs, notamment de l'alcoolate de titane et du composé du baryum et/ou du strontium mis en oeuvre, de la quantité et de la nature de l'acide organique sélectionné, de la température de travail et de la qualité recherchée pour la poudre amorphe; ils doivent être déterminés dans chaque cas particulier par un travail de routine au laboratoire. Par exemple, on peut avantageusement mettre en oeuvre des solutions alcooliques dont les teneurs respectives en alcoolate de titane et en composé du baryum et/ou du strontium n'excèdent pas 5 moles par litre et sont de préférence comprises entre 0,02 et 0,5 mole par litre.

Divers modes opératoires sont possibles pour exécuter l'hydrolyse.

Selon un premier mode opératoire, on introduit séparément mais simultanément, dans une chambre de réaction, l'acide organique ou son dérivé ainsi que des solutions, dans un solvant organique, de l'alcoolate de titane, du composé du baryum et/ou 5 du strontium et de l'eau.

Selon un second mode opératoire, qui est préféré, on sélectionne de l'hydroxyde ou de l'oxyde de baryum et/ou de strontium, on réalise un prémélange homogène dudit hydroxyde ou oxyde avec l'eau dans un solvant organique commun, par exemple un alcool, on ajoute l'acide organique ou son dérivé à l'alcoolate de titane, puis on réunit l'ensemble des réactifs.

Dans chacun de ces modes opératoires, on peut opérer de la manière exposée dans la demande de brevet GB-A-2168334.

Dans une variante avantageuse du second mode opératoire qui vient d'être décrit, on met en oeuvre un hydroxyde de baryum et/ou de strontium hydraté, en solution dans un solvant organique, l'eau d'hydratation de l'hydroxyde constituant une partie au moins de l'eau nécessaire à la réaction d'hydrolyse. On préfère sélectionner un hydroxyde hydraté dont le taux d'hydratation est suffisant pour apporter la totalité de l'eau nécessaire à l'hydrolyse de l'alcoolate de titane.

Des particularités et détails complémentaires concernant l'hydrolyse sont exposés dans les demandes de brevet belge 087.00311 et français 87.09116 (SOLVAY & Cie).

A l'issue de la réaction d'hydrolyse, on recueille une poudre de fines particules constituées d'un mélange complexe d'oxydes mixtes de titane et de baryum et/ou strontium à l'état amorphe, plus ou moins hydratés, et de résidus organiques. La poudre est formée, pour l'essentiel, de particules généralement sphériques, présentant un diamètre n'excédant pas 5 microns, habituellement compris entre 0,05 et 2 microns. Les résidus organiques présents dans la poudre amorphe comprennent l'acide organique ou son dérivé, qui s'y trouve lié chimiquement aux oxydes mixtes et, le cas échéant, les solvants organiques qui ont été mis en oeuvre pour l'hydrolyse.

La poudre peut éventuellement subir un séchage pour éliminer l'eau et les solvants organiques qu'elle contient. Le cas échéant, le séchage doit être opéré en atmosphère contrôlée, exempte d'oxygène, et à une température inférieure à la température d'ébullition du composé organique acide. En pratique, il est opéré sous atmosphère inerte (par exemple sous azote ou argon), à une température inférieure à 200°C, de préférence n'excédant pas 100°C.

A l'issue de l'hydrolyse et, le cas échéant, du séchage, on soumet la poudre amorphe à un chauffage dans une chambre de cristallisation, dans des conditions réglées pour cristalliser le titanate de baryum et/ou de strontium. Selon l'invention, pendant le chauffage, on fragmente les particules de la poudre amorphe, au moyen d'un processus opératoire particulier qui consiste à faire circuler, au contact de la poudre, un courant gazeux approprié, pour distiller et entraîner, dans celui-ci, l'acide organique ou son dérivé présent dans la poudre. A cet effet, le courant gazeux doit comprendre un gaz sélectionné parmi la vapeur d'eau, l'ammoniac et le dioxyde de carbone et il doit se trouver à une température suffisante pour distiller le composé organique acide, dans les conditions de pression mises en oeuvre. On assiste alors à une fragmentation des particules généralement sphériques de la poudre amorphe, sous l'effet de là distillation de l'acide organique ou son dérivé et de son entraînement dans le courant gazeux. Il est impératif que le courant gazeux ne contienne pas d'oxygène ni d'autre gaz oxydant. Il peut éventuellement contenir un gaz inerte, qui ne réagit pas avec l'acide organique ou son dérivé et les oxydes mixtes formant la poudre, par exemple de l'azote ou de l'argon. En pratique, sa teneur en vapeur d'eau, en ammoniac et/ou en dioxyde de carbone doit être suffisante pour obtenir la fragmentation des particules. La teneur optimum va dépendre de divers paramètres parmi lesquels figurent la dimension des particules de la poudre amorphe, la nature et la quantité de l'acide organique ou son dérivé mis en oeuvre à l'étape d'hydrolyse, la technologie de la chambre de cristallisation, la température et la pression régnant dans celle-ci, le débit, la température et la pression du courant gazeux. Elle doit être déterminée dans chaque cas particulier par un travail de routine au laboratoire. En pratique, des teneurs d'au moins 50 % en volume, de préférence supérieure à 70 % conviennent bien. La vapeur d'eau est préférée pour des considérations de facilité de mise en oeuvre, et elle constitue alors de préférence la totalité du courant gazeux.

La température du courant gazeux est critique. Elle doit être au moins suffisante pour provoquer une ébullition de l'acide organique ou de son dérivé. Elle va par ailleurs influencer l'énergie de la fragmentation et, par voie de conséquence, la dimension moyenne des fragments de particules formés. Elle dépend dès lors des dimensions recherchées pour les cristaux de titanate de baryum et/ou de strontium, ainsi que des dimensions des particules sphériques de la poudre amorphe, de l'acide organique ou son dérivé mis en oeuvre, de la composition du courant gazeux, notamment sa concentration en vapeur d'eau, en ammoniac et/ou en dioxyde de carbone et de la pression régnant dans le réacteur. Elle peut être facilement déterminée par un travail de routine au laboratoire. Il convient toutefois d'éviter une température excessive qui aurait pour effet de dégrader et réticuler l'acide organique ou son dérivé avant son élimination de la poudre. La température optimum du courant gazeux doit dès lors être déterminée dans chaque cas particulier, par un travail de routine au laboratoire. En général, on fixe la température du courant gazeux entre 350 et 700°C, les températures comprises entre 400 et 600°C étant préférées.

De préférence, le traitement de la poudre amorphe avec le courant gazeux est exécuté dès le début du chauffage et il est poursuivi suffisamment longtemps pour obtenir une fragmentation des particules de la poudre. En pratique, il peut être arrêté dès que l'on a obtenu un degré de fragmentation compatible avec la granulométrie recherchée pour les cristaux de titanate de baryum et/ou de strontium. Il n'est dès lors pas indispensable de poursuivre le traitement avec le courant gazeux jusqu'à ce que la totalité de l'acide organique ou son dérivé ait été extraite de la poudre. D'une manière générale, on peut par exemple poursuivre le traitement avec le courant gazeux jusqu'à ce qu'on ait éliminé de la poudre plus de 80 % (de préférence au moins 90 %) de la quantité pondérale de l'acide organique ou son dérivé initialement présente. Le traitement avec le courant gazeux peut être aisément contrôlé par une mesure de concentration en matières organiques dans le courant gazeux recueilli en aval de la chambre de cristallisation.

Pendant le traitement avec le courant gazeux, les particules formant la poudre amorphe se brisent en fragments et simultanément du titanate de baryum et/ou de strontium cristallise. A l'issue du traitement avec le courant gazeux, il peut s'avérer qu'une partie des fragments de titanate de baryum et/ou de strontium soient encore à l'état amorphe et il est dès lors souhaitable, de poursuivre le chauffage dans des conditions de température et de pression compatibles avec une cristallisation. La phase de chauffage qui suit le traitement avec le courant gazeux doit être exécutée au-dessous de la température de frittage de la poudre. En pratique, il est dès lors recommandé d'exécuter cette phase de chauffage à une température inférieure à 1000°C, par exemple entre 600 et 800°C. On recommande par ailleurs de travailler en l'absence d'humidité. Ladite phase de chauffage est de préférence poursuivie jusqu'à ce que la totalité du titanate de baryum et/ou de strontium de la poudre ait cristallisé.

Selon l'invention, la phase de chauffage précitée qui suit le traitement avec le courant gazeux est exécutée au moyen d'un gaz oxydant, exempt d'humidité, que l'on fait circuler au contact de la poudre. Le gaz oxydant est un gaz contenant de l'oxygène qui a pour fonction de brûler les éventuels résidus carbonés présents dans la poudre et résultant d'une pyrolyse partielle de l'acide organique ou son dérivé pendant le traitement avec le courant gazeux contenant la vapeur d'eau, l'ammoniac et/ou le dioxyde de carbone. L'air sec convient bien. Selon l'invention, la durée du traitement de la poudre avec le gaz oxydant est déterminée en fonction notamment du débit du gaz oxydant, de sa teneur en oxygène, de sa température, de la quantité de résidus carbonés présents dans la poudre à l'issue du traitement avec le courant gazeux contenant de la vapeur d'eau, de l'ammoniac et/ou du dioxyde de carbone, ainsi que de la teneur résiduelle acceptée en résidus carbonés parmi les cristaux à produire. Il n'est dès lors pas indispensable de poursuivre le traitement avec le gaz oxydant jusqu'à ce que la poudre soit totalement exempte de résidus carbonés. D'une manière générale, on peut par exemple cesser le traitement avec le gaz oxydant dès que l'on a extrait de la poudre plus de 80 % (de préférence au moins 90 %) de la quantité pondérale de résidus carbonés qui y étaient présents à l'issue du traitement avec le courant gazeux contenant de la vapeur d'eau, de l'ammoniac et/ou du dioxyde de carbone. Le traitement avec le gaz oxydant peut être facilement contrôlé par une mesure des concentrations en dioxyde de carbone dans le gaz oxydant, respectivement en amont et en aval de la chambre de cristallisation.

Dans le procédé selon l'invention, le traitement de la poudre avec le courant gazeux contenant de la vapeur d'eau, de l'ammoniac et/ou du dioxyde de carbone et, le cas échéant, le traitement avec le gaz oxydant peuvent être exécutés dans toutes chambres de cristallisation adaptées pour la mise en contact d'un gaz avec une poudre. Ils peuvent par exemple être éxécutés dans un réacteur à lit fixe ou à lit fluidisé, ou dans une chambre tubulaire horizontale ou oblique, soumise à une rotation autour de son axe.

A l'issue du procédé selon l'invention, on recueille une poudre finement divisée de cristaux de titanate de baryum et/ou de strontium, de dimensions généralement inférieures au micron et présentant un profil anguleux.

L'invention concerne dès lors aussi, l'utilisation du procédé selon l'invention pour l'obtention de cristaux de titanate de baryum et/ou de strontium, qui se présentent à l'état de particules de dimensions inférieures au micron et de morphologie anguleuse, irrégulière.

Les cristaux de titanate de baryum et/ou de strontium obtenus par le procédé selon l'invention trouvent une application dans la mise en oeuvre de matériaux céramiques qui, par définition, sont des matériaux inorganiques non métalliques, dont la mise en oeuvre au départ d'une poudre requiert des traitements à haute température, tels que des traitements de fusion ou de frittage (P. William Lee - "Ceramics" - 1961 - Reinhold Publishing Corp. - page 1; Kirk Othmer Encyclopedia of Chemical Technology - Third edition - Volume 5 - 1979, John Wiley & Sons, USA - pages 234 à 236 : "Ceramics, scope"). Ils trouvent également des applications intéressantes dans la mise en oeuvre de composites pour l'industrie électronique, notamment des semi-conducteurs.

Les exemples dont la description suit servent à illustrer l'invention. Ces exemples sont produits en référence aux figures 1 à 4 des dessins annexés.
La figure 1 montre, en élévation, un appareil de laboratoire utilisé pour la mise en oeuvre du procédé selon l'invention;
La figure 2 est une reproduction photographique d'une poudre amorphe d'oxydes mixtes de titane et de baryum obtenue à l'issue de l'étape d'hydrolyse du procédé selon l'invention, la poudre étant observée au microscope à transmission électronique, au grossissement 20000 x;
La figure 3 est une reproduction photographique d'une poudre de cristaux de titanate de baryum obtenus par le procédé conforme à l'invention par cristallisation de la poudre de la figure 1 et observée au microscope à transmission électronique au grossissement 20000 x;
La figure 4 montre la poudre de la figure 3, au grossissement 40000 x;
Pour chacun des essais dont la description suit, on a d'abord préparé une poudre amorphe d'oxydes mixtes de titane et de baryum. A cet effet, on a préparé séparément, sous atmosphère d'azote anhydre, d'une part, une solution de 0,2 mole de n-propoxyde de titane dans du n-propanol à 25°C et, d'autre part, une solution de 0,065 mole d'hydroxyde de baryum monohydraté dans un mélange de méthanol et de n-propanol (dans le rapport de 1 volume de méthanol pour 2 volumes de propanol), à 25°C. On a prélevé 65 ml de la solution de n-propoxyde de titane, on y a additionné 2,85 ml d'acide oléique et 57,15 ml de n-propanol, puis le mélange résultant a été introduit dans une chambre de réaction maintenue sous atmosphère d'azote anhydre où on l'a porté à 60°C. Ensuite, on y a ajouté en une fois 200 ml de la solution d'hydroxyde de baryum hydraté à 25°C. La température du milieu réactionnel dans la chambre de réaction s'est établie à 45°C environ. On a réalisé dans la chambre une agitation intense pour obtenir rapidement un mélange réactionnel homogène avant que débute une nucléation. On a ensuite fait subir au mélange réactionnel un mûrissage de deux heures sous agitation modérée, à 60°C. A l'issue du mûrissage, on a soumis le mélange réactionnel à une centrifugation et on a recueilli une poudre amorphe d'oxydes mixtes de titane et de baryum, que l'on a lavée avec de l'alcool puis séchée dans un courant d'azote à la température ambiante.

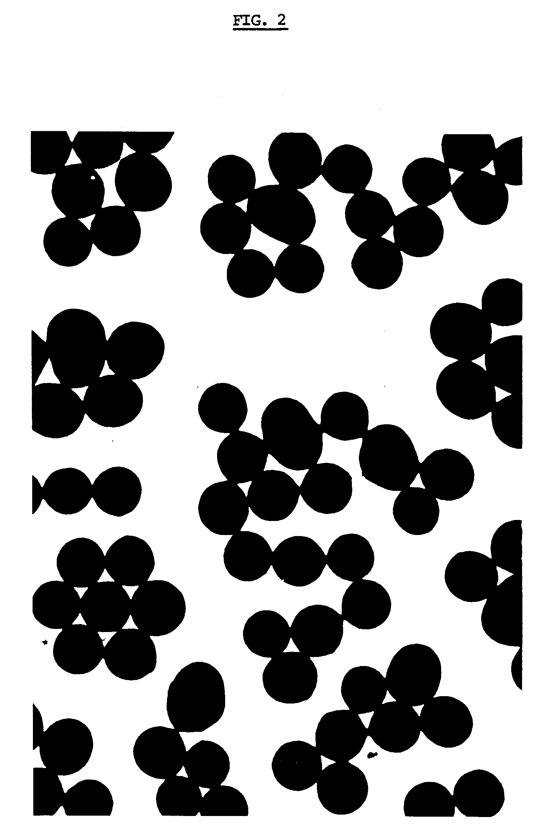

La poudre amorphe obtenue à l'issue du séchage était formée de particules sphériques. Elle est représentée à la figure 2.

On a prélevé dix échantillons de la poudre amorphe ainsi obtenue et on les a soumis respectivement aux dix essais faisant l'objet des exemples 1 à 10 décrits ci-dessous.

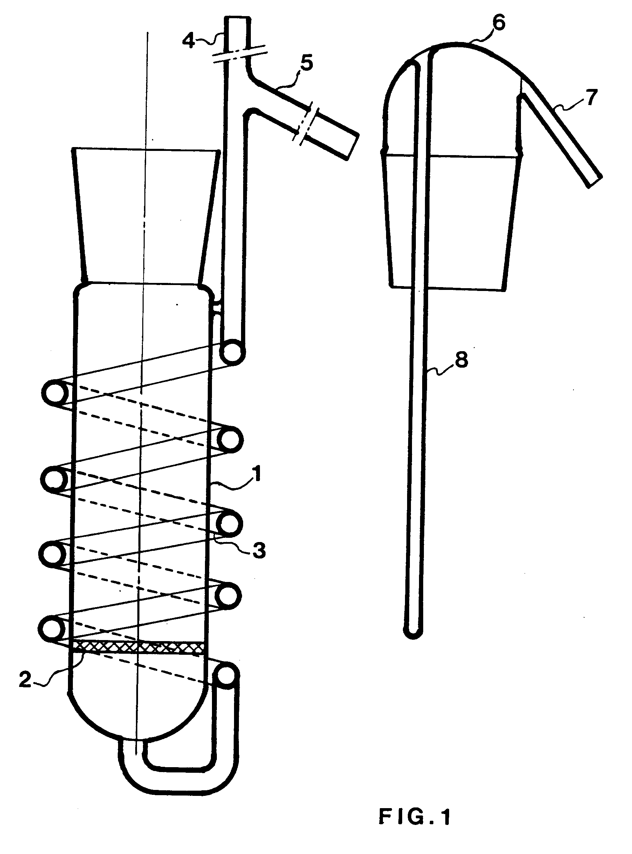

Pour la mise en oeuvre de ces essais, on a utilisé le cristalliseur de laboratoire schématisé à la figure 1. Celui-ci comprend une chambre verticale cylindrique en quartz 1, munie, près du fond, d'un support poreux en verre fritté 2, destiné à recevoir un échantillon de la poudre. Dans le fond de la chambre 1 débouche l'extrémité d'un serpentin 3, également en quartz, enroulé autour de la chambre 1. A son extrémité supérieure, le serpentin se trouve en communication avec deux conduits 4 et 5 pour l'admission de gaz ou de liquides.

Un bouchon amovible en quartz 6 sert à obturer la chambre 1. Il est pourvu d'un conduit 7 mettant la chambre 1 en communication avec l'ambiance, et d'une gaine 8 servant de logement à un thermocouple.

Pendant les essais, le cristalliseur, chargé de l'échantillon de poudre sur le support 2, est disposé dans un four que l'on soumet à un programme thermique défini dans chaque exemple.

### Première série d'essais (conformes à l'invention)

### Exemple 1

On a mis en oeuvre un échantillon de 10 g de la poudre amorphe dans la chambre 1 et on a introduit dans celle-ci de l'azote anhydre à pression atmosphérique, via le conduit 4, au débit de 100 ml/min, pour purger la chambre 1 de l'air qu'elle contenait. On a ensuite fait subir à la poudre un traitement thermique en trois phases.

Dans une première phase, on a chauffé le four pour atteindre progressivement la température de 450°C dans la chambre 1, que l'on a ensuite maintenue pendant 2 heures.

Dans une deuxième phase, on a poursuivi le chauffage du four pour élever progressivement la température dans la chambre 1 jusqu 'a 700°C et on a ensuite maintenu cette dernière température pendant 4 heures.

Dans une troisième phase, on a cessé le chauffage du four et on a laissé l'échantillon s'y refroidir progressivement jusqu'à la température ambiante.

Au cours de la première phase, on a maintenu en permanence le débit d'azote et on y a mélangé, via le conduit 5, de l'eau liquide au débit de 15 ml/heure, dès que la température dans le four eut atteint 180°C. Pendant sa circulation dans le serpentin 3, l'eau s'est rapidement vaporisée, de sorte que le courant gazeux admis à la base du support poreux 2 contenait environ 75 % en volume de vapeur d'eau. A l'issue de la première phase du procédé, on a cessé l'alimentation de l'azote et de l'eau et on y a substitué un courant d'air sec à pression atmosphérique, à raison de 100 ml/min. On a maintenu ce courant d'air pendant toute la seconde phase, puis on l'a arrêté.

Les conditions de l'essai sont reproduites au tableau 1 ci-dessous.

**Tableau 1**

| | PREMIERE ETAPE | DEUXIEME ETAPE |
|---|---|---|
| Courant gazeux | azote + vapeur d'eau | air sec |
| Température (°C) | 450 | 700 |
| Durée (heures) | 2 | 4 |

A l'issue de l'essai, on a retiré l'échantillon de la chambre de cristallisation 1. Sa masse était égale à 4,9 g et il s'est révélé être constitué de cristaux de titanate de baryum. Une analyse granulométrique au laser a révélé que 100 % de la masse de la poudre étaient formées de particules individuelles de dimensions inférieures au micron.

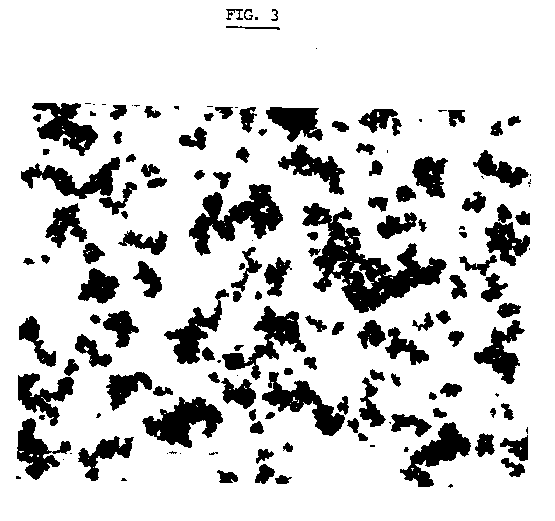

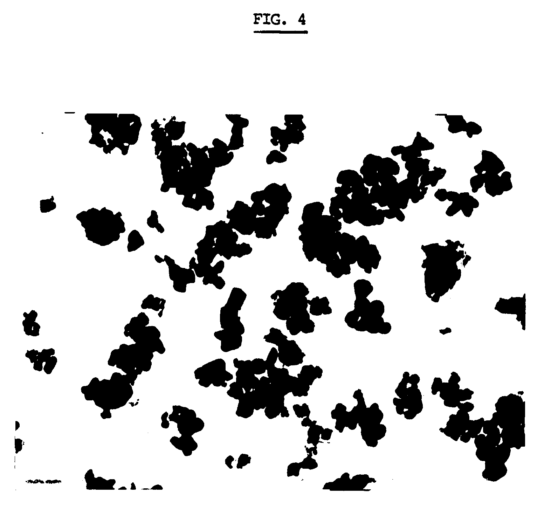

L'échantillon est représenté aux figures 3 et 4.

### Exemple 2

On a répété l'essai de l'exemple 1, en adoptant les conditions opératoires mentionnées au tableau 2 ci-dessous.

**Tableau 2**

| | PREMIERE ETAPE | DEUXIEME ETAPE |
|---|---|---|
| Courant gazeux | azote + vapeur d'eau | air sec |
| Température (°C) | 450 | 800 |
| Durée (heures) | 2 | 4 |

L'échantillon retiré du cristalliseur à l'issue de l'essai avait une masse de 4,8 g. Il était également formé d'une poudre de cristaux de titanate de baryum dont toutes les particules étaient de dimensions inférieures au micron.

### Exemple 3

On a répété toutes les conditions opératoires de l'essai de l'exemple 2, à la seule exception que le courant d'azote a été interrompu au moment de l'admission de la vapeur d'eau. Le tableau 3 ci-dessous résume les conditions opératoires de l'essai.

**Tableau 3**

| | PREMIERE ETAPE | DEUXIEME ETAPE |
|---|---|---|
| Courant gazeux | vapeur d'eau | air sec |
| Température (°C) | 450 | 800 |
| Durée (heures) | 2 | 4 |

L'échantillon qui fut recueilli à l'issue du traitement était pratiquement identique à celui obtenu à l'essai de l'exemple 2.

### Exemple 4

On a répété l'essai de l'exemple 1, en y apportant les modifications suivantes :
- masse de poudre amorphe mise en oeuvre : 10,4 g;
- courant gazeux à la première phase : un mélange d'azote, de vapeur d'eau et d'ammoniac obtenu en introduisant de l'azote (50 ml/min) via le conduit 4 et une solution aqueuse comprenant 1 mole d'ammoniaque par litre, à raison de 14 ml/h via le conduit 5;
- température de la première phase : 450°C, pendant 4 heures;
- température de la deuxième phase : 775°C, pendant 3 heures.

La poudre recueillie à l'issue de l'essai pesait 5 g. Elle s'est révélée formée de cristaux de titanate de baryum de dimensions inférieures au micron.

### Exemple 5

On a opéré comme à l'exemple 1, mais en substituant un courant de dioxyde de carbone sec (100 ml/min) à l'azote, depuis le début de l'essai jusqu'à la fin de la première phase. Le courant gazeux dans la chambre 1 pendant la première phase a consisté en CO₂ seul.

Les conditions opératoires sont mentionnées au tableau 4.

**Tableau 4**

| | PREMIERE PHASE | DEUXIEME PHASE |
|---|---|---|
| Courant gazeux | CO₂ | air sec |
| Température (°C) | 450 | 800 |
| Durée (heures) | 2 | 4 |

A l'issue de l'essai, on a retiré 4,7 g de poudre de la chambre 1. La poudre était constituée de cristaux de titanate de baryum qui étaient tous de dimensions inférieures au micron.

### Exemple 6

On a répété l'essai de l'exemple 5, en introduisant de l'eau liquide (9 ml/h) dans le conduit 5 pendant toute la durée de la première étape. On a par ailleurs adopté les conditions opératoires suivantes :
Température de la première phase : 500°C, pendant 5 heures;
Température de la deuxième phase : 650°C, pendant 20 heures.

A l'issue de l'essai, on a recueilli 5 g d'une poudre formée essentiellement de cristaux de titanate de baryum ayant tous des dimensions inférieures au micron.

### Exemple 7

On a répété l'essai de l'exemple 1 en adoptant les conditions opératoires suivantes :
- courant gazeux introduit dans le serpentin 3 et la chambre de cristallisation 1 pendant la première phase : mélange d'azote (50 ml/min) et d'ammoniac (50 ml/min);
- température pendant la première phase : 450°C, pendant 2 heures;
- température pendant la deuxième phase : 700°C, pendant 4 heures.

A l'issue de l'essai, on a recueilli 4,9 g de poudre. Celle-ci était formée de cristaux de titanate de baryum qui étaient tous de dimensions inférieures au micron.

### Seconde série d'essais (essais de référence)

Dans les essais des exemples suivants, on a volontairement omis d'appliquer une ou plusieurs des conditions opératoires du procédé selon l'invention.

### Exemple 8

On a travaillé comme exposé à l'exemple 1, mais on a omis d'introduire de la vapeur d'eau dans la chambre de cristallisation 1 pendant la première phase du procédé.

Les conditions opératoires sont résumées au tableau 5.

**Tableau 5**

| | PREMIERE PHASE | DEUXIEME PHASE |
|---|---|---|
| Courant gazeux | azote (100 ml/min) | air sec (100 ml/min) |
| Température (°C) | 450 | 700 |
| Durée (heures) | 2 | 4 |

A l'issue de l'essai, on a recueilli 4,9 g de poudre de cristaux de titanate de baryum. Une analyse granulométrique par la technique au laser a révélé la distribution granulométrique suivante :

| DIAMETRE MOYEN (d) | FRACTION PONDERALE |
|---|---|
| d ≦ 64 microns | 100 % |
| d ≦ 50 microns | 95 % |
| d ≦ 1 micron | 70 % |

### Exemple 9

On a reproduit toutes les conditions de l'essai de l'exemple 8, à la seule exception que l'azote a été remplacé par de l'air sec pendant la première étape.

L'analyse granulométrique au laser a révélé la distribution granulométrique suivante :

| DIAMETRE MOYEN (d) | FRACTION PONDERALE |
|---|---|
| d ≦ 64 microns | 100 % |
| d ≦ 35 microns | 95 % |
| d ≦ 3 microns | 50 % |
| d ≦ 1 micron | 35 % |

### Exemple 10

Dans cet essai, on a mis en oeuvre à la première phase un courant gazeux constitué d'un mélange d'air et de vapeur d'eau. A cet effet, on a introduit de l'air sec par le conduit 4 (167 ml/min) et de l'eau liquide par le conduit 5 (9 ml/min). La deuxième phase a été réalisée sous un courant d'air sec, comme à l'exemple 8. On a par ailleurs appliqué les conditions opératoires suivantes :
Température pendant la première phase : 500°C, pendant 4 heures;
Température pendant la deuxième phase : 775°C, pendant 3 heures.

A l'issue de l'essai, on a recueilli 4,9 g d'une poudre formée de titanate de baryum présentant l'analyse granulométrique suivante :

| DIAMETRE MOYEN (d) | FRACTION PONDERALE |
|---|---|
| d ≦ 64 microns | 100 % |
| d ≦ 60 microns | 95 % |
| d ≦ 1 micron | 63 % |

Une comparaison des résultats des exemples 1 à 7 (conformes à l'invention) avec ceux des exemples 8 à 10 montre que l'omission d'une ou plusieurs des conditions du procédé selon l'invention a conduit à une formation d'agglomérats de cristaux.

## Revendications

1. Procédé pour la fabrication de cristaux de titanate de baryum et/ou de strontium, comprenant une coprécipitation d'oxyde de titane et d'oxyde de baryum et/ou de strontium à l'état d'une poudre amorphe et un chauffage de la poudre amorphe à une température comprise entre 400 et 1000°C, caractérisé en ce que, pendant la coprécipitation, on hydrolyse un alcoolate de titane en présence a) d'un composé du baryum et/ou du strontium sélectionné parmi les oxydes, les hydroxydes et les alcoolates, et b) d'un acide organique ou l'un de ses dérivés contenant plus de 6 atomes de carbone dans la molécule, que pendant le chauffage de la poudre amorphe, on fragmente les particules qui la constituent en distillant l'acide organique ou son dérivé dans un courant gazeux que l'on fait circuler au contact de la poudre, ledit courant gazeux comprenant un gaz sélectionné parmi la vapeur d'eau, l'ammoniac et le dioxyde de carbone et étant exempt d'oxygène et d'un autre gaz oxydant et qu'après avoir distillé l'acide organique ou son dérivé, on fait circuler au contact de la poudre un gaz oxydant exempt d'humidité.

2. Procédé selon la revendication 1, caractérisé en ce que l'acide organique est sélectionné parmi les acides carboxyliques contenant au moins 8 atomes de carbone dans leur molécule.

3. Procédé selon la revendication 1 ou 2, caractérisé en ce que l'acide organique est mis en oeuvre en une quantité comprise entre 20 et 200 g par mole de titanate de baryum et/ou de strontium et la vapeur d'eau, l'ammoniac et/ou le dioxyde de carbone est mis en oeuvre en une quantité au moins égale à 50 % en volume dans le courant gazeux.

4. Procédé selon l'une quelconque des revendications 1 à 3, caractérisé en ce que le gaz oxydant utilisé après l'opération de distillation est de l'air sec.

5. Procédé selon l'une quelconque des revendications 1 à 4, caractérisé en ce que le courant gazeux est mis en oeuvre à une température comprise entre 400 et 600°C et le gaz oxydant est mis en oeuvre à une température comprise entre 600 et 800°C.

6. Procédé selon la revendication 4 ou 5, caractérisé en ce qu'on fait circuler le courant gazeux au contact de la poudre amorphe, jusqu'à élimination de plus de 80 % de la quantité pondérale de l'acide organique ou son dérivé initialement présente dans la poudre, et on fait ensuite circuler le gaz oxydant au contact de la poudre jusqu'à élimination de plus de 80 % de la quantité pondérale de résidus carbonés présents dans la poudre à l'issue du traitement avec le courant gazeux.

7. Utilisation du procédé selon l'une quelconque des revendications 1 à 6 pour l'obtention de cristaux de titanate de baryum et/ou de strontium se présentant à l'état de particules de dimensions inférieures au micron et de morphologie anguleuse, irrégulière.

8. Utilisation du procédé selon l'une quelconque des revendications 1 à 6 pour l'obtention de cristaux de titanate de baryum et/ou de strontium aptes à la fabrication de matériaux céramiques et de composites pour l'industrie électronique, notamment des semi-conducteurs.

## Claims

1. Process for the manufacture of barium titanate and/or strontium titanate crystals comprising a coprecipitation of titanium oxide and of barium oxide and/or strontium oxide in the state of an amorphous powder and heating the amorphous powder to a temperature of between 400 and 1000°C, characterized in that, during the coprecipitation, a titanium alcoholate is hydrolyzed in the presence of a) a barium and/or strontium compound selected from the oxides, hydroxides andalcoholates, and b) an organic acid or one of its derivatives containing more than 6 carbon atoms in the molecule, in that, during the heating of the amorphous powder, the particles forming the latter are fragmented by distilling off the organic acid or its derivative in a stream of gas which is passed in contact with the powder, the said stream of gas comprising a gas selected from water vapour, ammonia and carbon dioxide and being free from oxygen and from another oxidising gas, and in that, after the organic acid or its derivative has been distilled off, an oxidising gas free from moisture is passed in contact with the powder.

2. Process according to Claim 1, characterized in that the organic acid is selected from carboxylic acids containing at least 8 carbon atoms in their molecule.

3. Process according to Claim 1 or 2, characterized in that the organic acid is employed in an amount of between 20 and 200 g per mole of barium titanate and/or strontium titanate, and the water vapour, ammonia and/or carbon dioxide is employed in an amount at least equal to 50% by volume in the stream of gas.

4. Process according to any one of Claims 1 to 3, characterized in that the oxidizing gas used after the distillation operation is dry air.

5. Process according to any one of Claims 1 to 4, characterized in that the stream of gas is employed at a temperature of between 400 and 600°C, and the oxidizing gas is employed at a temperature of between 600 and 800°C.

6. Process according to Claim 4 or 5, characterized in that the stream of gas is passed in contact with the amorphous powder until more than 80% of the amount by weight of the organic acid or its derivative initially present in the powder has been removed, and the oxidizing gas is then passed in contact with the powder until more than 80% of the amount by weight of carbonaceous residues present in the powder after the treatment with the stream of gas has been removed.

7. Use of the process according to any one of Claims 1 to 6, barium titanate and/or strontium titanate crystals which area in the state of particles less than one micron in size and have an irregular, angular morphology.

8. Use of the process according to any one of Claims 1 to 6, for the production of barium titanate and/or strontium titanate crystals suitable for the manufacture of ceramic materials and of composites for the electronics industry, in particular semiconductors.

## Patentansprüche

1. Verfahren zur Herstellung von Barium- und/oder Strontiumtitanatkristallen, das eine Co-Ausfällung von Titanoxyd und Barium- und/oder Strontiumoxyd im Zustand von amorphem Pulver und ein Erhitzen des amorphen Pulvers auf eine Temperatur zwischen 400 und 1000°C umfaßt, dadurch gekennzeichnet, daß man während der Co-Ausfällung ein Titanalkoholat in Anwesenheit von a) einer Barium- und/oder Strontiumverbindung, ausgewählt unter den Oxyden, Hydroxyden und Alkoholaten und b) einer organischen Säure oder einer ihrer Derivate, die mehr als 6 Kohlenstoffatome im Molekül enthält, hydrolysiert, daß man während des Erhitzens des amorphen Pulvers die Teilchen, die es bilden, aufbricht, indem man die organische Säure oder ihr Derivat in einem gasförmigen Strom, den man in Kontakt mit dem Pulver zirkulieren läßt, destilliert, wobei der gasförmige Strom ein Gas umfaßt, das ausgewählt ist unter Wasserdampf, Ammoniak und Kohlendioxid und frei von Sauerstoff und einem anderen oxydierenden Gas ist, und daß man, nachdem man die organische Säure oder ihr Derivat destilliert hat, ein von Feuchtigkeit freies, oxydierendes Gas in Kontakt mit dem Pulver zirkulieren läßt.

2. Verfahren nach Anspruch 1, dadurch gekennzeichnet, daß die organische Säure ausgewählt ist unter den Carbonsäuren, die wenigstens 8 Kohlenstoffatome in ihrem Molekül enthalten.

3. Verfahren nach Anspruch 1 oder 2, dadurch gekennzeichnet, daß die organische Säure in einer Menge zwischen 20 und 200 g pro Mol Barium- und/oder Strontiumtitanat eingesetzt wird und der Wasserdampf, das Ammoniak und/oder das Kohlendioxyd in einer Menge von wenigstens gleich 50 Vol.-% in dem gasförmigen Strom eingesetzt werden.

4. Verfahren nach einem der Ansprüche 1 bis 3, dadurch gekennzeichnet, daß das nach dem Vorgang der Destillation verwendete oxydierende Gas trockene Luft ist.

5. Verfahren nach einem der Ansprüche 1 bis 4, dadurch gekennzeichnet, daß der gasförmige Strom bei einer Temperatur zwischen 400 und 600°C eingesetzt wird und das oxydierende Gas bei einer Temperatur zwischen 600 und 800°C eingesetzt wird.

6. Verfahren nach Anspruch 4 oder 5, dadurch gekennzeichnet, daß man den gasförmigen Strom in Kontakt mit dem amorphen Pulver zirkulieren läßt, bis zur Elimination von mehr als 80% der Gewichtsmenge der anfangs in dem Pulver anwesenden organischen Säure oder ihres Derivats, und daR man dann das oxydierende Gas in Kontakt mit dem Pulver zirkulieren läßt bis zur Elimination von mehr als 80 % der Gewichtsmenge der am Ende der Behandlung mit dem gasförmigen Strom in dem Pulver anwesenden kohlenstoffhaltigen Rückstände.

7. Verwendung des Verfahrens nach einem der Ansprüche 1 bis 6 zum Erhalt von Barium- und/oder strontiumtitanatkristallen, die den Zustand von Teilchen mit Abmessungen kleiner als 1 Mikron und eine scharfkantige, unregelmäßige Morphologie aufweisen.

8. Verwendung des Verfahrens nach einem der Ansprüche 1 bis 6 zum Erhalt von Barium- und/oder strontiumtitanatkristallen, die zur Herstellung von keramischen Materialen und Werkstoffen für die Elektronikindustrie, insbesondere Halbleiter, geeignet sind.
